# EUROPEAN PATENT SPECIFICATION

(11) **EP 3 025 903 B1**
(45) Date of publication and mention of the grant of the patent: **07.06.2017**
(21) Application number: 15187294.2
(22) Date of filing: 29.09.2015
(51) Int. Cl.: B60N 2/48, B60N 2/427

(54) **ADJUSTABLE, ENERGY-ABSORBING HEADREST SUPPORTS FOR MOTOR VEHICLES OR THE LIKE**
VERSTELLBARE ENERGIEABSORBIERENDE KOPFSTÜTZENTRÄGER FÜR KRAFTFAHRZEUGE UND DERGLEICHEN
SUPPORTS D'APPUIE-TÊTES AJUSTABLES À ABSORPTION D'ÉNERGIE POUR DES VÉHICULES À MOTEUR OU SIMILAIRES

(30) Priority: 30.09.2014 US 201414501129
(43) Date of publication of application: 01.06.2016
(73) Proprietor: Badger, Berkley C., Tarpon Springs, FL 34688 (US)
(72) Inventor: Badger, Berkley C., Tarpon Springs, FL 34688 (US)
(74) Representative: Heinze, Ekkehard

(56) References cited:
- EP-A2- 0 963 872
- NL-C2- 1 018 059
- US-A1- 2003 001 413
- US-A1- 2007 035 163

## Description

### Field of the Invention:

The invention pertains to headrests for motor vehicles and, more particularly, to adjustable, energy-absorbing headrests utilizing bundled strands or fibers as supports.

### BACKGROUND OF THE INVENTION

Typical vehicular headrests are supported by two rigid structural members, normally hollow metal rods. These metal rods are generally cylindrical and have diameters typically ranging between approximately 9 and approximately12 millimeters. These metal rods are received in receiver tubes each having an inside diameter slightly larger than the diameter of the rod they must receive and retain. These receiver tubes are typically disposed within a vehicle seat back with tube-receiving openings in the top back portion of those seat backs.

Structural detents along the outside vertical edge of at least one structural member is normally used in conjunction with a spring loaded catch, to set the elevation of the headrest into a position which better suits the comfort of the individual occupying the seat. This rigid metallic rod with receiver tube scheme has been in general automotive use for over 30 years.

A prior art vehicular headrest support is disclosed in US 2003/001413 A1.

The existing structures and methods for providing headrest support and comfort adjustment typically have two problems:
The first problem concerns the safety of the head, neck, and/or back of an occupant of the vehicle seat when the vehicle encounters a force imparted from the rear, for example, in a rear end collision.

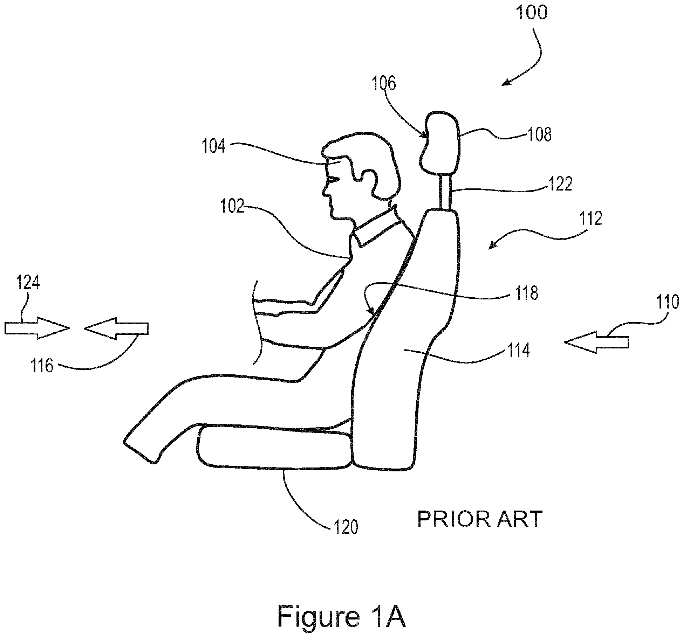

Referring first to FIGURE 1A, there is shown a side elevational, schematic view of a passenger 102 in a seat 112 including a headrest 108, generally at reference number 100. While a passenger 102 may keep his or her head 104 in contact with the front surface 106 of headrest 108, other passengers may not. Regardless, when blunt force 110 is introduced from behind seat 112, the mass of the passenger 102 is transferred into the back 114 of the seat 112 and headrest 108 as the seat 112, typically attached to the frame of the vehicle, not shown, is propelled forward. This forward motion is represented by arrow 116.

As seat 112 with attached headrest 108 moves forward as shown by arrow 116, front surface 106 of headrest 108 typically makes contact with the head 104 and back 118 of the passenger 102. It will be recognized that when passenger 102 already has his or her head in contact with front surface 106 of headrest 108 when force 110 is applied to seat 112, passenger 102 experiences increased resistance between his or her head 104 and headrest 108 as well as his or her back118 and seatback 114.

While seatbacks 114 and headrests 108 are typically padded for comfort, the padding and padding support are generally designed to be self-restoring. This means that they revert to their original shapes and contours after being subjected to a compressing or other shape-distorting force, for example, force 110. This restoration is sometimes accomplished with spring steel or other similar material, typically in the form of wire, neither shown, embedded within the seatback 112 and headrest 108. Seatback 114 and headrest 108 are both typically formed from either closed cell or open cell foam padding, not specifically identified. Such foam materials also provide resistance.

Consequently, when a force 110 is imparted to seat 112, more specifically to seat back 114 and headrest 108, seat back 114 and headrest 108 both rebound as they attempt to assume their original shape and contour, as well as their original position with respect to the vehicle frame. This rebounding process applies an opposite (relative to initial force 110) force 124. Force 124 is also applied to and absorbed by passenger 102.

In addition to this rebound effect in the material composition, the seat frame, not shown, and structural members (e.g. supports 122) of headrest 108 offer additional rebound force.

During introduction of force 110 from the rear direction, the change in position of vehicle and seat cause the seatback 114 and headrest 108 to move into contact with the individual's back 118 and head 104, thus loading and transferring force presented by the mass of the body of occupant 102 into the vehicle seat 112, headrest 108, and structural members (e.g., supports 122). Very little of this energy is absorbed and dissipated. Rather, the energy is instead loaded into the seat padding, spring steel wire supports, headrest padding the spring steel wire support the seatback frame, the connecting member(s) between the seatback and seat bottom, and the headrest support members 122 between the seatback 114 and headrest 108.

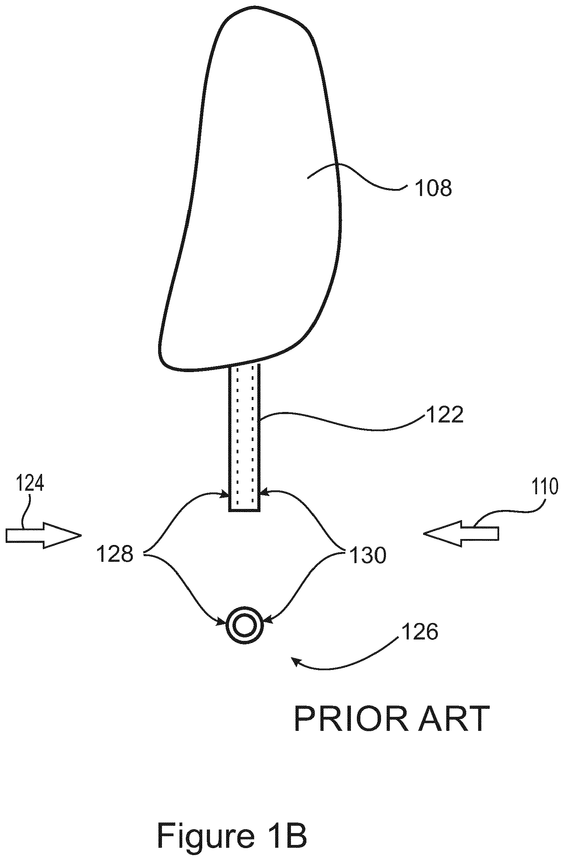

In an existing headrest support design incorporating rigid structural supports, such supports typically having metallic content, the dynamic response of such structures to a rear impact may be seen in FIGURE 1B. Referring now also to FIGURE 1B, there is shown a side elevational, schematic view of the headrest 108 with a bottom plan schematic view 126 of the headrest support tube 122 shown therewith. FIGURE 1B illustrates a common design utilizing a hollow metallic tube 122. When a force 110 is applied to posterior side 130 of headrest support tube 122, posterior side 130 compresses. As posterior side 130 compresses, anterior side 128 of headrest support tube 122 deforms, typically stretching. As the posterior side 130 and anterior side 128 of headrest support tube 122 return to their uncompressed/upstretched state (i.e., achieves equilibrium) "rebound" energy 124 is generated. Rebound energy 124 is then reintroduced into the seat 112 and seat occupant 102.

It would, therefore, be advantageous to provide a headrest support system that absorbs energy applied to it and reintroduces far less energy back into the seat's occupant than do existing headrest support systems.

Discussion of the Related Art:
Several attempts to provide improved support systems for vehicle headrests may be found in the prior art. For example, United States Patent No. 6,071,835 for LOAD LIMITING WEBBING issued June 6, 2000 to Weimimg Tang, et al. teaches articles containing PET (Polyethylene terephthalate) fibers that absorb energy in a collision. [Column 1, lines 31 - 38]

United States Patent No. 7,588,289 for VEHICLE SEAT issued September 15, 2009 to Ola Boström, et al. discloses a vehicle seat comprising a squab and a backrest with an attached headrest. The headrest is provided with a mechanism that moves the headrest forwardly in the event that an impact should occur. A locking mechanism is provided to lock the headrest to prevent forward movement of the headrest in response to a predetermined signal. The signal may be generated in response to a rear impact in excess of a predetermined severity.

Neither of these patents, taken singly, or in combination are seen to teach or suggest the Adjustable, Energy-Absorbing Headrest for Motor Vehicles or the like of the present invention.

### SUMMARY OF THE INVENTION

In accordance with the present invention there is provided a headrest support formed from energy-absorbing strands or fibers and bundles thereof that greatly reduce the amount of energy rebounded into a vehicle occupant, especially when the vehicle in which the occupant is riding is hit from the rear (i.e., a rear end collision). In addition, headrest supports formed from twisted strand bundles, are ridged enough to completely support the headrest, but may be deformable enough to allow positional adjustment of the head rests in three dimensions. Currently, headrests are adjustable in only a single plane.

### BRIEF DESCRIPTION OF THE DRAWINGS

Various objects, features, and attendant advantages of the present invention will become more fully appreciated as the same becomes better understood when considered in conjunction with the accompanying drawings, in which like reference characters designate the same or similar parts throughout the several views, and wherein:
FIGURE 1A is a side elevational, partial, schematic view of a vehicle seat with a passenger seated therein in accordance with the prior art;
FIGURE 1B is a side elevational, schematic view of the headrest portion of FIGURE 1A with a bottom plan schematic view of the support tube shown therewith;
FIGURE 2 is side elevational, schematic view of a single pair of intertwined strands;
FIGURE 3A is a side perspective, schematic view of a cylindrical structure formed from a plurality of intertwined strand pairs of FIGURE 2;
FIGURE 3B is a top or bottom plan, schematic view of the cylindrical structure of FIGURE 3A;
FIGURE 3C is a top or bottom plan, schematic view of the cylindrical structure of FIGURE 3B showing heat conductive elements contained within the strand bundle;
FIGURE 3D is a top or bottom plan, schematic view of the cylindrical structure of FIGURE 3B showing an outer metallic layer thereon;
FIGURE 3E is a side perspective, schematic view of an elongated structure having the cross section of FIGURE 3D and suitable for forming a headrest support in accordance with the invention;
FIGURE 4A is a side elevational, schematic view of a seat having a headrest supported on a support formed from twisted strand bundles;
FIGURE 4B is an enlarged view of a portion of the seat and headrest of FIGURE 4A;
FIGURE 4C is a side elevational, schematic view of a seat having a headrest supported on a support formed from twisted strand bundles and formed so as to move the headrest to a passenger selected position; and
FIGURE 4D is an enlarged view of a portion of the seat and headrest of FIGURE 4C.

### DETAILED DESCRIPTION OF THE PREFERRED EMBODIMENT

The present invention provides new structures for supporting vehicular headrests that provide greater energy absorption capacity than support structures of the prior art. The novel structures minimize the secondary force on an occupant caused by restoration of support structures and materials after an impact, especially a rear end impact. In addition, the new support structures provide flexibility in adjusting headrest positions heretofore unknown.

The present invention utilizes bundles of strands to implement headrest support structures. These strands are typically formed from a ductile metal such as an aluminum alloy. It will be recognized by those of skill in the art that various aluminum alloys or other ductile metals may be used to form strands or strand bundles suitable for forming headrest supports in accordance with the invention. It will be further recognized that fibrous or polymeric materials may also be used to form strands. Consequently, the invention is not considered limited to strands formed by any particular material. It will be further recognized that bundles of strands may contain strands formed from more than one material.

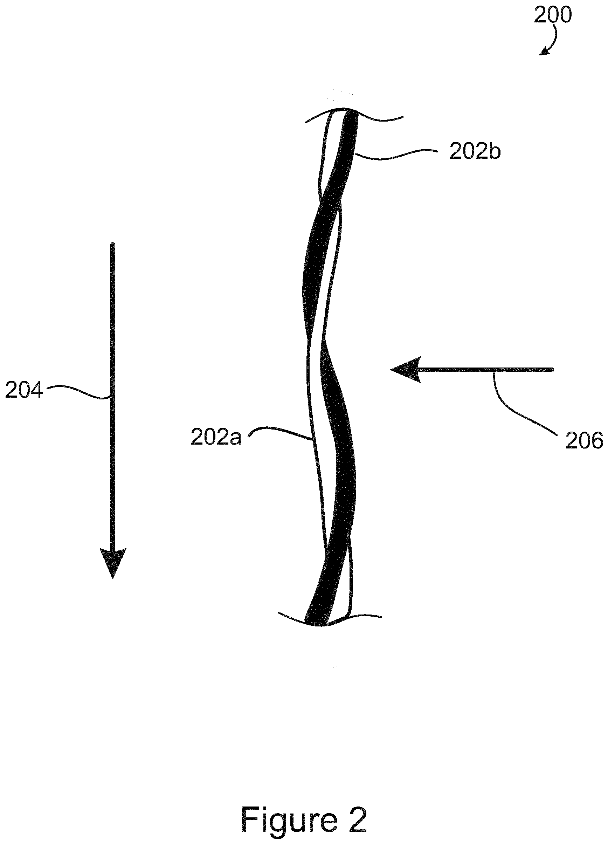

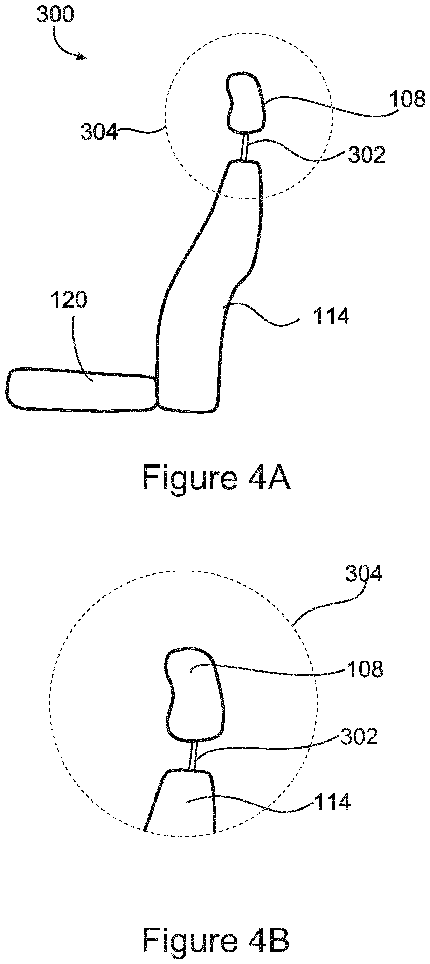

Referring first to FIGURE 2, there is shown a side perspective, schematic view of a pair of metal, fiber, or polymeric strands illustrating the conceptual foundation of the new energy-absorbing headrest support system 302 (best seen in FIGURES 4A - 4D) of the invention, generally at reference number 200. As used herein the term "metal strand or strands" is intended to include strands from any fibrous or polymeric material in addition to metal.

A pair of strands 202a, 202b is shown schematically in a twisted configuration. Such a configuration typically has two important properties: slip resistance, and rigidity. When strands such as 202a, 202b in contact along a major axis 204, have a substantially perpendicular force 206 imposed upon them, one strand (e.g., strand 202a) may move a slightly different distance than the other strand (e.g., strand 202b). Such movement results in strands 202a, 202b rubbing or chafing against one another. Because strands 202a, 202b are in contact with one another, the relative movement of strand 202a against strand 202b, etc. causes friction. This friction between strand 202a and strand 202b as they move relative to one another generates heat, and consequently, a small amount of the energy of force 206 is thereby absorbed.

Force 206 might, for example, be generated by a rear end collision of a vehicle, not shown, having a headrest 108 supported by a strand based support structure 302 (best seen in FIGURES 4A - 4D).

By choosing the strand material and placement geometry, the amount of generated heat may be maximized and energy impinging on strands 202a, 202b may be dissipated as it is converted to heat. In other words, the kinetic rebound energy is largely converted into heat that is then dissipated along the strands, strand bundles, or adjacent strands and/or strand bundles.

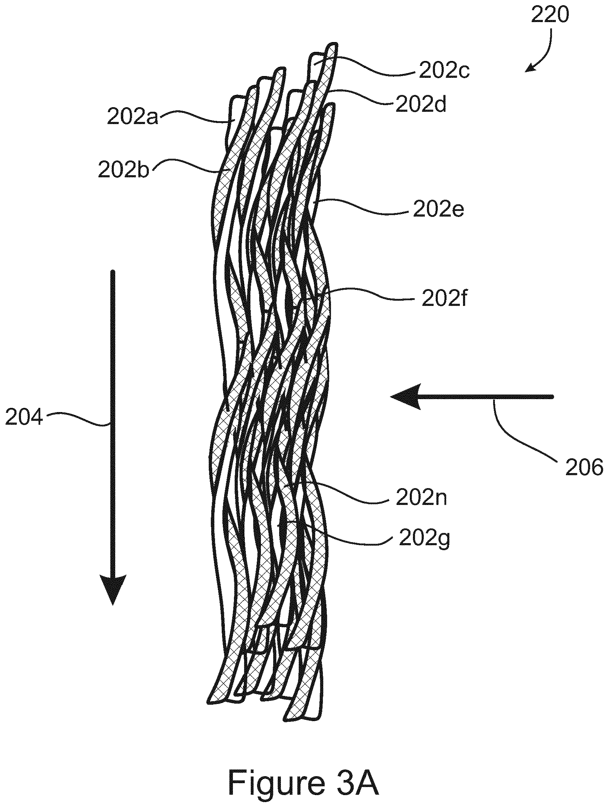

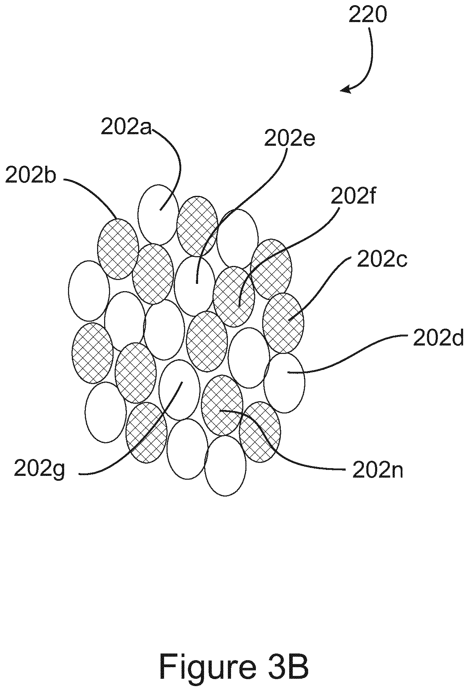

Referring now also to FIGURES 3A and 3B, there are shown side perspective, and top or bottom plan schematic views, respectively, of a multi-strand, elongated, quasi-cylindrical structure from which a support structure 302 for a vehicle headrest may be constructed, generally at reference number 220. The single pair of strands 202a, 202b of FIGURE 2 illustrates the principle of operation of novel headrest support structure. A practical headrest support structure may be formed of multiple strands. The multiple strand pairs, triplets, quartets, etc. 202a/202b, 202c/202d, 202e/202f, 202g ... 202n of the multi-strand structure 220 merely multiply the structural ability to absorb energy. For simplicity, the term "pair" is used generically hereinafter to represent any multiple strand group wherein one or more strands 202a, 202c, 202e, 202g, etc. may chafe against one another (e.g., 202b, 202d, 202f, 202n, etc.) to generate heat thereby absorbing energy. It will be recognized by those of skill in the art that strand bundles may be composed of homogenous or non-homogenous combinations of strand pairs, triplets, quartets, etc. and the invention in not considered to any particular combination of strand bundles.

While structure 220 assumes that all strands 202a, 202b, ..., 202n therein are identical, it will be recognized that alternate structures, none shown, may be constructed. Consequently, the invention is not considered limited to the strand structures chosen for purposes of disclosure. Rather, the invention is intended to include any strand configuration and combination of strand sizes, strand shapes, and strand materials.

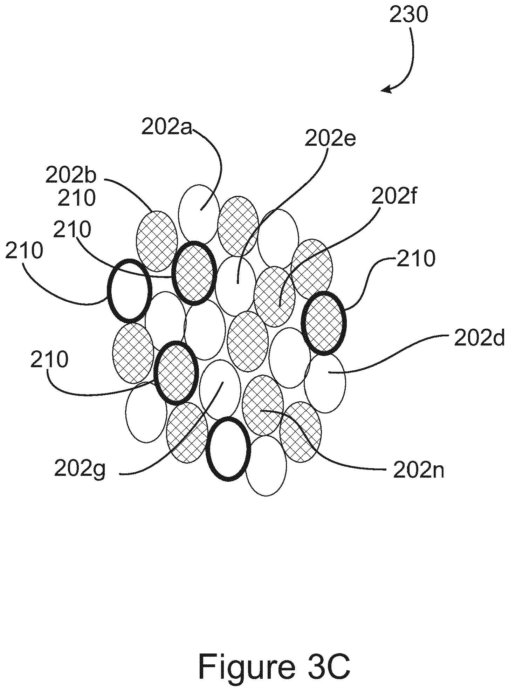

Referring now also to FIGURE 3C, there is shown a bottom plan, schematic view of the strand bundle 220 of FIGURE 3B but with a plurality of added heat conducting components (e.g., strands) 210, generally at reference number 230. Heat conducting strands 210 may be formed from a heat conducting material such as copper, aluminum, or other good heat conducting metal. Alternately, any other suitable heat conducting material may be used. Strands 210 may be single strands placed among the strand pairs 202a. 202b, etc., or alternately, heat conducting strands 210 may be entwined within selected strand pairs 202a, 202b, etc., or heat conducting strands 210 may replace one of the non-heat conducting strands.

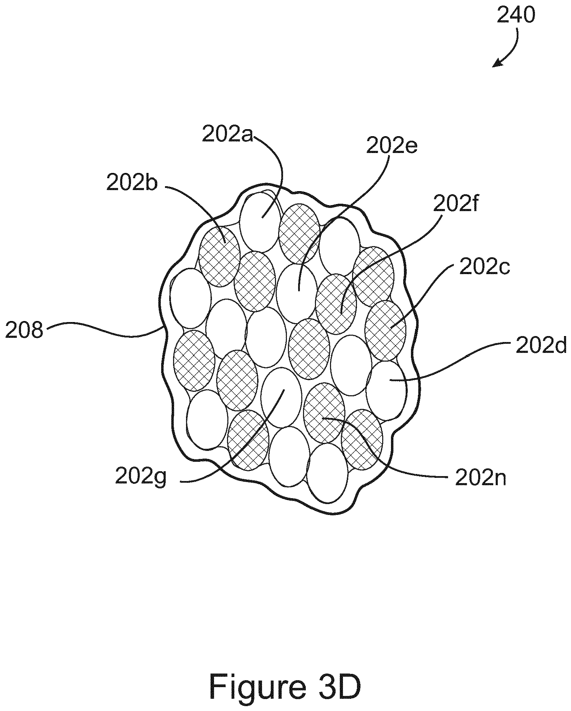

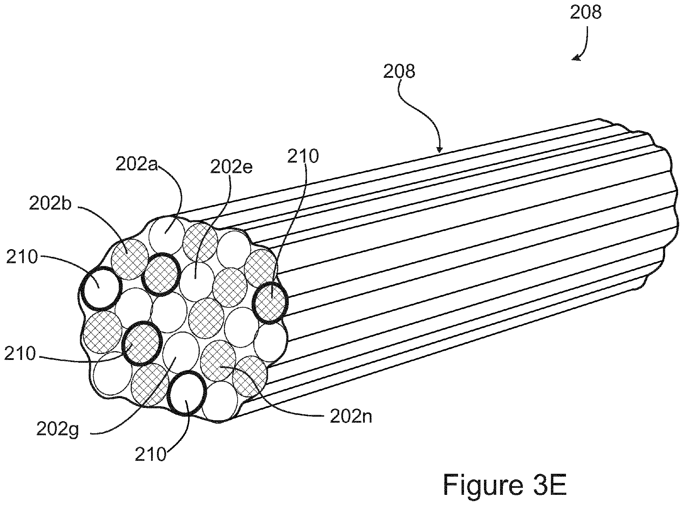

Referring now also to FIGURES 3D and 3E, there is shown a bottom plan, schematic view and a side perspective, schematic view of the strand bundle 230 of FIGURE 3C with an outer metallic coating 208, generally at reference number 240. Metallic coating 208 protects strand bundle 230 and provides mechanical strength (e.g., rigidity) to strand bundle 230, thereby forming a suitable component from which to form a headrest support member 302, best seen in FIGURES 4A and 4B.

Metallic coating may be sprayed, plated, extruded, or otherwise deposited onto an outer surface of strand bundle 230 using materials and techniques or processes believed to be well known to those of skill in the art. Some alternate materials that may be used for such coatings or covers include, but are not limited to phenolic, rubber, plastic, or combinations thereof. Consequently, such material and techniques are not further discussed herein and the invention is intended to include any and all materials and or processes.

Referring now also to FIGURES 4A and 4B, there are shown a partial side elevational, schematic view and an enlarged portion thereof, respectively, of a vehicle seat using headrest support 302 formed from elongated structure 240, generally at reference number 300.

In FIGURES 4A and 4B, headrest support 302 is disposed in a substantially straight (i.e., unformed) configuration. Headrest support member 302 is both energy-absorbing and somewhat flexible.

As previously discussed, elongated structure 240 when formed into a headrest support structure 302 may be formed by a seat occupant so as to position headrest 108 to a desirable position.

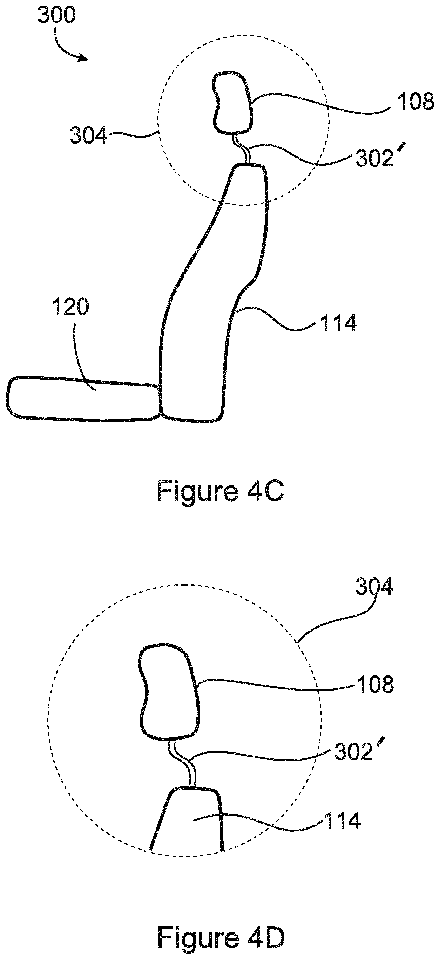

Referring now also to FIGURES 4C and 4D, the illustrations of FIGURES 4A and 4B, respectively, show headrest support 302' formed so as to move headrest 108 to a passenger selected position.

Headrest support member 302 is both energy-absorbing and somewhat flexible.

Since other modifications and changes varied to fit particular operating requirements and environments will be apparent to those skilled in the art, the invention is not considered limited to the example chosen for purposes of disclosure, and covers all changes and modifications which do not constitute departures from the true spirit and scope of this invention.

Having thus described the invention, what is desired to be protected by Letters Patent is presented in the subsequently appended claims.

## Claims

1. A vehicular headrest support (302; 302'), **characterized by**:
a) a plurality of strands (202a, 202b, ... 202n, 210) each having a proximal end and a distal end, said strands being twisted into groupings of at least two strands each, each of said groupings having a major axis (204), said groupings being laid in close proximity to one another with respective major axes of each being parallel to one another, at least one of said proximal end and said distal end of each of said plurality of strands being coplanar;
whereby at least one selected from the group: adjacent ones of said plurality of strands, and adjacent ones of said groups may move relative to one another along said major axis when said plurality of strands is subjected to a force directed thereagainst from a direction other than a direction parallel to said major axis.

2. The vehicular headrest support (302; 302') as recited in claim 1, wherein at least one of said plurality of strands (202a, 202b, ... 202n, 210) comprises a heat-conducting strand (210).

3. The vehicular headrest support (302; 302') as recited in claim 2, wherein said groupings laid in close proximity to one another for an elongated structure (302) having an end cross-sectional area chosen from the group: approximately circular, and an irregular polygon.

4. The vehicular headrest support (302; 302') as recited in claim 3, further comprising:
a sheath (208) encircling said plurality of strands along substantially an entire length of said plurality of strands, said sheath comprising at least one material from the group: metal, phenolic, rubber, plastic, or combinations thereof.

5. The vehicular headrest support (302; 302') as recited in claim 4, wherein said vehicular headrest support comprises a major axis parallel to said major axes (204) of said groupings and wherein said vehicular headrest support may be formed to move at least a portion along said major axis.

## Patentansprüche

1. Fahrzeugkopfstützenhalterung (302; 302'), **gekennzeichnet durch**:
a) mehrere Stränge (202a, 202b, ... 202n, 210), wovon jeder ein proximales Ende und ein distales Ende hat, wobei die Stränge in Gruppierungen von jeweils zwei Strängen verdrillt sind, wobei jede der Gruppierungen eine Hauptachse (204) hat, wobei die Gruppierungen in nächster Nähe zueinander verlegt sind, wobei jeweilige Hauptachsen von jeder parallel zueinander sind, wobei das proximale Ende und/oder das distale Ende jedes der mehreren Stränge koplanar ist/sind;
wobei sich mindestens ein aus der Gruppe ausgewähltes Element: angrenzende Stränge der mehreren Stränge und angrenzende der Gruppen, in Bezug aufeinander entlang der Hauptachse bewegen kann, wenn die mehreren Stränge einer Kraft ausgesetzt werden, die aus einer anderen Richtung als einer zur Hauptachse parallelen Richtung gegen sie gerichtet ist.

2. Fahrzeugkopfstützenhalterung (302; 302') nach Anspruch 1, wobei mindestens einer der mehreren Stränge (202a, 202b, ... 202n, 210) einen wärmeleitenden Strang (210) hat.

3. Fahrzeugkopfstützenhalterung (302; 302') nach Anspruch 2, wobei die in nächster Nähe zueinander für eine langgestreckte Struktur (302) verlegten Gruppierungen eine Endquerschnittsfläche haben, die aus der Gruppe ausgewählt ist: ungefähr kreisförmig und unregelmäßiges Vieleck.

4. Fahrzeugkopfstützenhalterung (302; 302') nach Anspruch 3, darüber hinaus aufweisend:
eine Ummantelung (208), welche die mehreren Stränge entlang im Wesentlichen einer gesamten Länge der mehreren Stränge umschließt, wobei die Ummantelung mindestens ein Material aus der Gruppe umfasst: Metall, Phenol, Kautschuk, Kunststoff oder Kombinationen von diesen.

5. Fahrzeugkopfstützenhalterung (302; 302') nach Anspruch 4, wobei die Fahrzeugkopfstützenhalterung eine zu den Hauptachsen (204) der Gruppierungen parallele Hauptachse aufweist, und wobei die Fahrzeugkopfstützenhalterung dazu ausgebildet sein kann, sich zumindest einen Abschnitt entlang der Hauptachse zu bewegen.

## Revendications

1. Support appuie-tête véhiculaire (302 ; 302'), **caractérisé par** :
a) une pluralité de torons (202a, 202b, ... 202n, 210) présentant chacun une extrémité proximale et une extrémité distale, lesdits torons étant torsadés en groupements d'au moins deux torons chacun, chacun desdits groupements ayant un axe majeur (204), lesdits groupements étant posés à proximité étroite les uns des autres, les axes majeurs respectifs de chacun étant parallèles les uns aux autres, au moins l'une de ladite extrémité proximale et de ladite extrémité distale de chacun de ladite pluralité de torons étant coplanaire ;
sachant qu'au moins l'un sélectionné dans le groupe : torons adjacents de ladite pluralité de torons, et groupements adjacents desdits groupements, peut se déplacer l'un par rapport à l'autre le long dudit axe majeur lorsque ladite pluralité de torons est soumise à une force dirigée contre elle depuis une direction autre qu'une direction parallèle audit axe majeur.

2. Le support appuie-tête véhiculaire (302 ; 302') tel qu'exposé dans la revendication 1, sachant qu'au moins un de ladite pluralité de torons (202a, 202b, ... 202n, 210) comprend un toron conducteur de chaleur (210).

3. Le support appuie-tête véhiculaire (302 ; 302') tel qu'exposé dans la revendication 2, sachant que lesdits groupements posés à proximité étroite les uns des autres pour une structure allongée (302) ont une aire de section transversale terminale choisie dans le groupe : sensiblement circulaire, et un polygone irrégulier.

4. Le support appuie-tête véhiculaire (302 ; 302') tel qu'exposé dans la revendication 3, comprenant en outre :
une gaine (208) entourant ladite pluralité de torons le long de sensiblement une longueur entière de ladite pluralité de torons, ladite gaine comprenant au moins un matériau provenant du groupe : métal, matière phénolique, caoutchouc, plastique, ou des combinaisons de ceux-ci.

5. Le support appuie-tête véhiculaire (302 ; 302') tel qu'exposé dans la revendication 4, sachant que ledit support appuie-tête véhiculaire comprend un axe majeur parallèle auxdits axes majeurs (204) desdits groupements et sachant que ledit support appuie-tête véhiculaire peut être formé pour se déplacer au moins une partie le long dudit axe majeur.
